# EUROPÄISCHE PATENTSCHRIFT

(11) **EP 1 027 821 B1**
(45) Veröffentlichungstag und Bekanntmachung des Hinweises auf die Patenterteilung: **18.05.2005**
(21) Anmeldenummer: 00102491.8
(22) Anmeldetag: 05.02.2000
(51) Int. Cl.: A01F 29/10, A01F 29/04, A01F 15/10, A01D 90/04

(54) **Hydraulische Stelleinrichtung**
Hydraulic setting device
Dispositif hydraulique de positionnement

(30) Priorität: 12.02.1999 DE 19905835
(43) Veröffentlichungstag der Anmeldung: 16.08.2000
(73) Patentinhaber: CLAAS Selbstfahrende Erntemaschinen GmbH, 33428 Harsewinkel (DE)
(72) Erfinder: Scholz, Egbert, 33378 Rheda-Wiedenbrück (DE); Berkemann, Stephan, 33100 Paderborn (DE)

(56) Entgegenhaltungen:
- DE-A- 2 818 850
- DE-A- 4 302 199
- DE-U- 9 314 712

## Beschreibung

Die Erfindung bezieht sich auf eine hydraulische Stelleinrichtung, insbesondere zum wahlweisen Betätigen von Messern zum Zerkleinern von Erntegut in landwirtschaftlichen Erntemaschinen nach den Oberbegriffen der Ansprüche 1 und 2. Derartige Stelleinrichtungen für unterschiedliche Einsatzzwecke sind bereits in verschiedenen Ausführungen bekannt.

So ist beispielsweise in der DE 28 18 850 C2 eine Schneidvorrichtung für Erntegut beschrieben, die in einem Förderkanal eines von einem Traktor gezogenen Ladewagens angeordnet ist und die in ihrer Arbeitsstellung in den Förderkanal eingreifende und mit den Förderorganen zusammenwirkende Schneidmesser umfaßt, die mittels einer Stützvorrichtung in ihrer Arbeitsstellung gehalten und aus dieser in eine Außereingriffstellung bewegbar sind. Die Stützvorrichtung wird dabei durch eine schaltbare hydraulische Stellvorrichtung gebildet. Jedem Schneidmesser ist jeweils eine hydraulische Stellvorrichtung zugeordnet, wobei die Stellvorrichtungen unter Zwischenschaltung eines Hydro-Druckspeichers mit der Hydraulikanlage des Traktors gekoppelt sind. Diese Ausführung ermöglicht bei auftretenden Überlastungen durch Fremdkörpereinwirkung oder bei Verstopfungen ein selbsttätiges Zurückschwenken der Schneidmesser aus der Schneidzone und nach dem Beseitigen der Störung wieder ein automatisches Schwenken in die Arbeitsstellung. Eine wahlweise Schaltung der Anzahl der wirksamen Schneidmesseranpassung des Zerkleinerungsgrades an das Erntegut und an dessen Verwendung ist mit dieser Ausführung jedoch nicht möglich.

Mit der in der DE 43 02 199 C2 dargestellten Schneideinrichtung, die eine Mehrzahl schwenkbeweglicher Schneidmesser umfaßt, die durch hydraulisch steuerbare Stützorgane in die Schneidstellung gebracht werden und mittels einer Schalteinrichtung vollständig oder in wahlweiser Anzahl für das Verschwenken in eine Nichtschneidstellung von den Stützorganen freigegeben werden, ist zwar eine Anpassung an die jeweiligen Erntebedingungen möglich, jedoch erfordert sie aufgrund des komplizierten konstruktiven Aufbaus einen hohen Herstellungsaufwand.

Der Erfindung liegt die Aufgabe zugrunde, eine hydraulische Stelleinrichtung für die wahlweise Betätigung von Funktionselementen, wie beispielsweise von Gegenmessern so auszuführen, daß mit einem einfachen und kompakten Aufbau eine funktionsgerechte Lösung mit einem geringen Herstellungsaufwand geschaffen wird.

Erfindungsgemäß wird diese Aufgabenstellung durch die in den Ansprüchen 1 und 2 angegebenen Mittel unter Ausnutzung des gemeinsamen Wirkprinzips gelöst. Weitere vorteilhafte Ausführungen des Erfindungsgegenstandes ergeben sich aus den nachgeordneten Ansprüchen.

Die erfindungsgemäße Ausführung ermöglicht durch die kompakte Bauart einen geringen Bauraumbedarf. Durch die Betätigung der vorhandenen Hydraulikventile ist eine Vielzahl von möglichen Schaltungsvarianten der einzelnen Funktionselemente in der erforderlichen Anzahl erreichbar. Da nur wenige bewegliche Bauteile verwendet werden, ist der auftretende Verschleißund Wartungsaufwand sehr gering. Die einfache Ausführung der Blöcke in Flanschbauweise ermöglicht einschließlich der zugehörigen Hydraulikventile eine komplette Vormontage der gesamten Stelleinrichtung.

Die Erfindung wird nachstehend an einem Ausführungsbeispiel näher erläutert. In der zugehörigen Zeichnung zeigen:
- Figur 1: eine Seitenansicht des Aufnahme- und Schneidbereiches einer Rundballenpresse,
- Figur 2: die Stelleinrichtung für die Gegenmesser in einer schematischen Längsschnittdarstellung,
- Figur 3: einen Hydraulikzylinder mit der Kolbenstangenverbindung zu einem Gegenmesser im Schnitt III-III nach Figur 6,

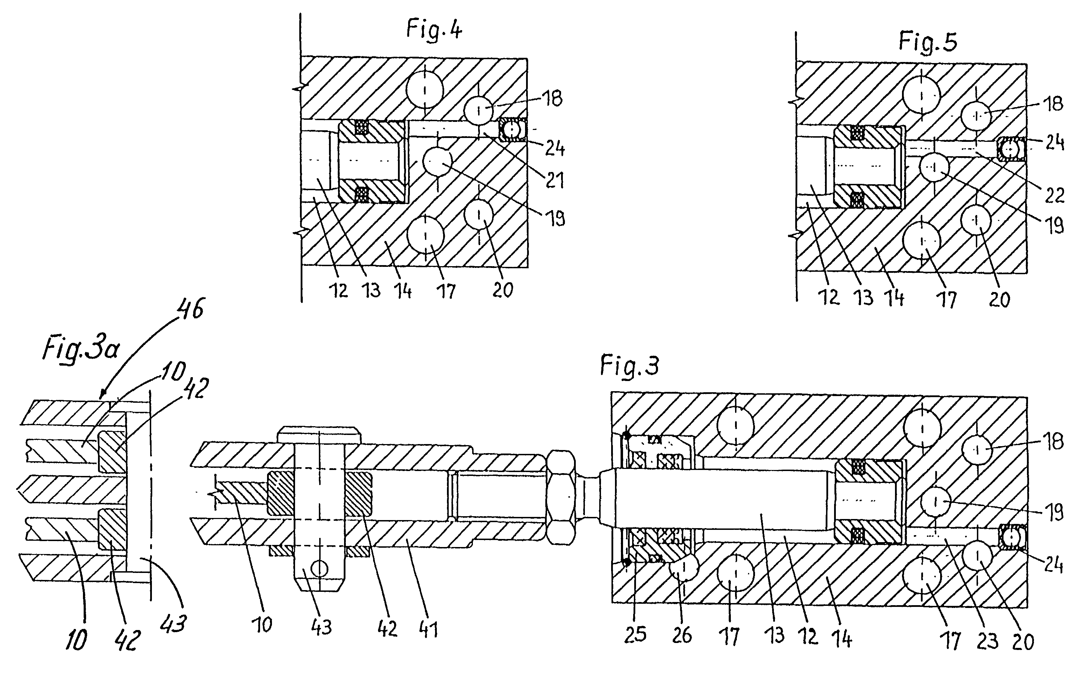

- Figur 3 a: eine alternative Ausbildung des Tragteils

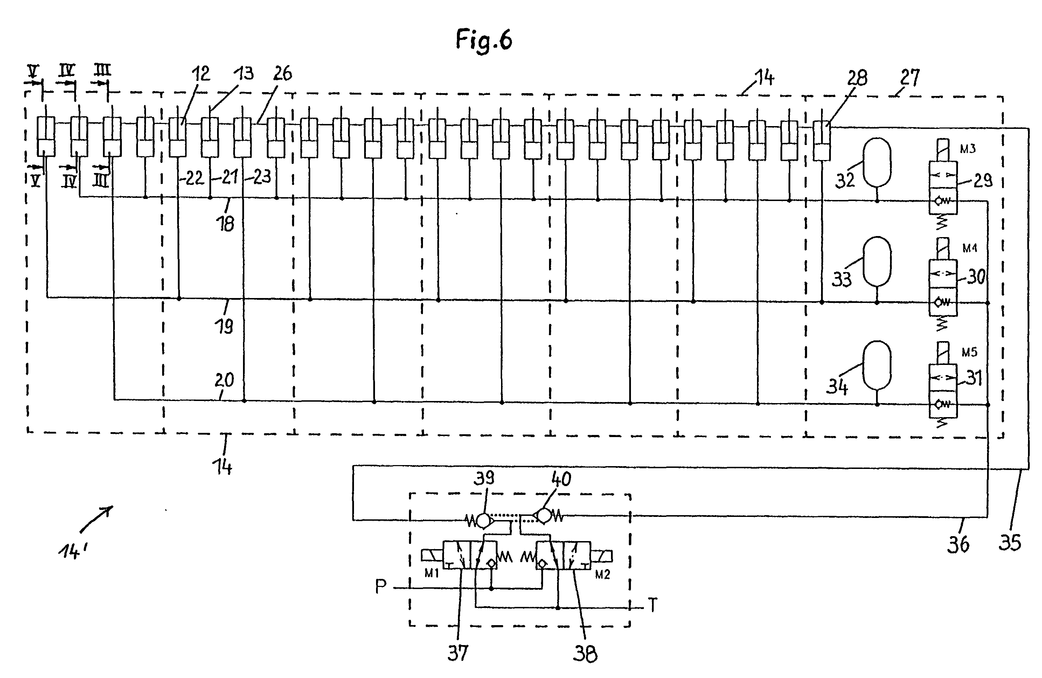

- Figur 4: den Bodenbereich eines Hydraulikzylinders im Schnitt IV-IV nach Figur 6,
- Figur 5: den Bodenbereich eines Hydraulikzylinders im Schnitt V-V nach Figur 6,
- Figur 6: das Hydraulikschema für die Stelleinrichtung.

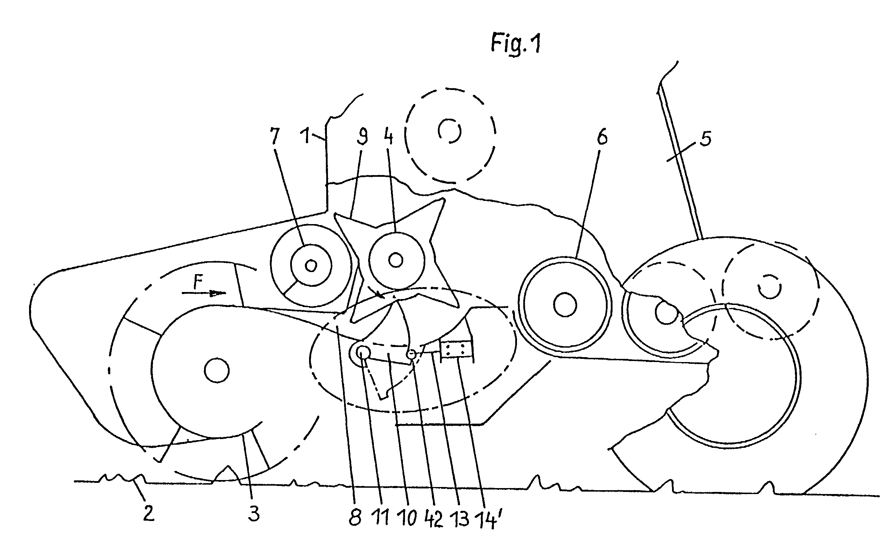

Bei einer in der Figur 1 teilweise dargestellten Rundballenpresse 1 wird das auf dem Feldboden 2 abgelegte gemähte Erntegut über eine Aufnehmertrommel 3 und einen Schneidrotor 4 dem Preßraum 5 mit mehreren am Umfang angeordneten Preßwalzen 6 zugeführt. Von der Aufnehmertrommel 3 gelangt das Erntegut zunächst unterhalb einer Zuführtrommel 7 in einem Förderkanal 8 zu dem Schneidrotor 4, dessen Zinkenscheiben 9 mit unterhalb des Schneidrotors 4 angeordneten Messern beziehungsweise am Ausführungsbeispiel gezeigten Schneidmessern 10 zusammenwirken und das Erntegut zerkleinern. Die Schneidmesser 10 sind quer zur Fördereinrichtung F des Ernteguts über die gesamte Breite des Förderkanals 8 mit Abstand nebeneinander in einer Reihe angeordnet. Der jeweilige Zerkleinerungsgrad des Ernteguts wird in Anpassung an dessen Art, Beschaffenheit und Verwendung durch die Anzahl der zur Wirkung kommenden Schneidmesser 10 bestimmt. Je größer die Anzahl der wirksamen Schneidmesser 10 ist, desto stärker wird das Erntegut zerkleinert. Die Schneidmesser 10 sind auf einer, sich über die gesamte Breite des Förderkanals 8 durchgehend erstreckenden Achse 11 schwenkbeweglich angeordnet. Mit Hilfe einer hydraulischen Stelleinrichtung werden die Schneidmesser 10 in eine Schneid- oder in eine Nichtschneidstellung vollständig oder in wahlweiser Anzahl um die Achse 11 geschwenkt.

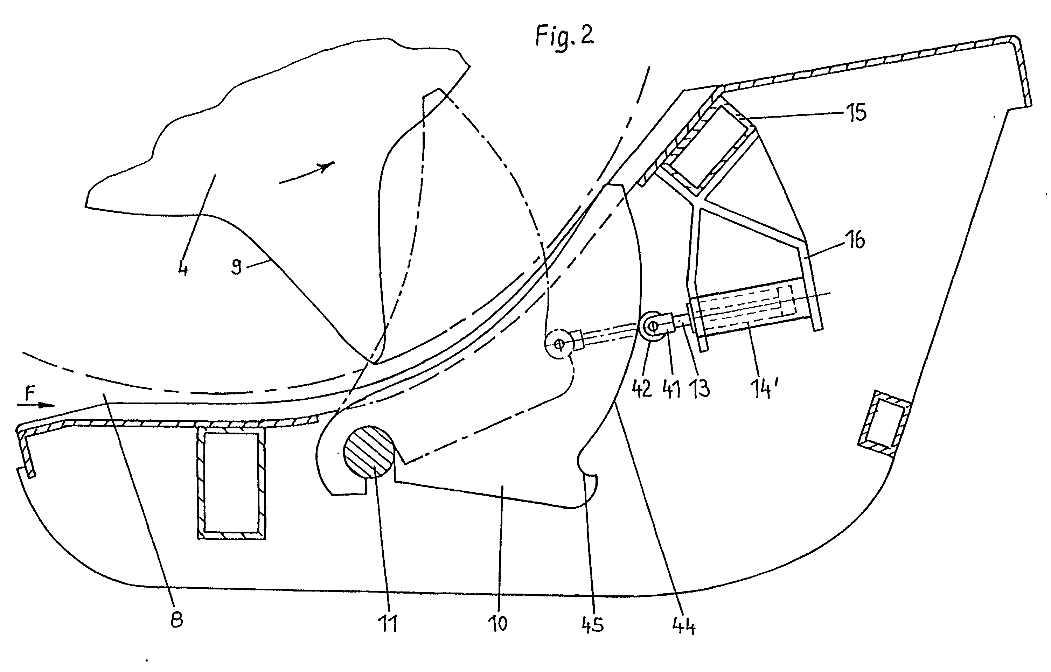

In der Figur 2 ist die Schneidstellung der Schneidmesser 10 mit Strich-Punkt-Linien und die Nichtschneidstellung mit einer Vollinie dargestellt. Für die Einleitung der Schwenkbewegung sind im rückwärtigen Bereich der Schneidmesser 10 Hydraulikzylinder 12 angeordnet, deren Kolbenstangen 13 die Schneidmesser 10 in die jeweils erforderliche Stellung bringen. Jedem einzelnen Schneidmesser 10 ist ein doppelt wirkender Hydraulikzylinder 12 zugeordnet. Diese Hydraulikzylinder mit den dazugehörigen Anschluß- und Verbindungsleitungen sind dabei innerhalb eines Blocks 14 angeordnet, dessen Gehäuse aus einem quaderförmigen Gußteil besteht. Jeder einzelne Block 14 mit den einzelnen Hydraulikzylindern 12 bildet eine eigene Baugruppe. In einem Block 14 können entsprechend dem jeweiligen Anwendungszweck mehrere Hydraulikzylinder 12 nebeneinander angeordnet sein, es ist aber auch möglich, nur einen einzigen Hydraulikzylinder in einem Block 14 anzuordnen. Durch Aneinanderfügen mehrerer zueinander abgedichteter Blöcke 14 kann die Breite der Stelleinrichtung variiert und den erforderlichen Einsatzverhältnissen angepaßt werden. Je nach Anzahl der Hydraulikzylinder in einem jeweiligen Block 14 und der Anzahl der zu schaltenden Schneidmesser 10 kann eine entsprechende Anzahl von Blöcken 14 zu einer Hydraulikbaueinheit 14' zusammengefaßt werden.

Die Blöcke 14 sind als Hydraulikbaueinheit 14' an einer mit einem Querträger 15 der Rundballenpresse 1 verbundenen Halterung 16 hinter den Schneidmessern 10 befestigt. Die einzelnen Blöcke 14 sind beispielsweise durch eine Schraubverbindung zu einer gemeinsamen Hydraulikbaueinheit 14' verbunden, als Verbindungstechnik sind aber auch alle sonstigen bekannten Verfahren einsetzbar. Für die Schraubverbindung befinden sich in den Blöcken 14 vier durchgehende Querbohrungen 17, in die Gewindestangen einführbar und an deren Enden Muttern befestigbar sind, die an den Außenwänden der Blöcke 14 anliegen.

Bei dem in der Figur 6 schematisch dargestellten Ausführungsbeispiel ist eine Hydraulikbaueinheit 14' dargestellt. Sie ist zusammengesetzt aus einer Kopfeinheit und sechs Blöcken 14, bei denen in jedem Block 14 jeweils vier Hydraulikzylinder 12 nebeneinander angeordnet sind. Die einzelnen Blöcke 14 sind durch Strichlinien angedeutet. Im Bodenbereich eines jeden Blocks 14 sind drei quer zur Längsachse der Hydraulikzylinder 12 verlaufende Bohrungen 18, 19, 20 angeordnet, die als Druckleitungen für die Zu- beziehungsweise Abführung des Druckmittels dienen. Diese Bohrungen 18, 19, 20 stehen mit jeweils zugehörigen einzelnen Anschlußbohrungen 21, 22, 23 in Verbindung, die parallel zur Längsachse der Hydraulikzylinder 12 verlaufen. Sie stellen die Verbindung zwischen den Bohrungen 18, 19, 20 und den Zylinderräumen der Hydraulikzylinder her. Die Anschlußbohrungen 21, 22, 23 sind mittels Dichtstopfen 24 an den Außenwänden der Blöcke 14 abgedichtet. Im Bereich der Zylinderköpfe 25 der Hydraulikzylinder 12 ist im jeweiligen Block 14 eine weitere Bohrung 26 für die Druckmittelzu- beziehungsweise Abführung angeordnet, die sich ebenfalls quer zur Längsachse der Hydraulikzylinder 12 durch den gesamten Block 14 erstreckt. Die einzelnen Blöcke 14 sind so nebeneinander angeordnet, daß die in den einzelnen Blöcken 14 befindlichen Bohrungen 18, 19, 20 und 26 jeweils eine zusammenhängende Leitung für Hydraulikflüssigkeit bilden, die sich über die gesamte Breite der aneinanderliegenden Blöcke 14 erstreckt.

In einem endseitigen Block 27 sind neben den Blöcken 14 in der dargestellten Ausführung (Figur 6) ein Hydraulikzylinder 28 sowie drei Schaltventile 29, 30, 31 für die wahlweise zu betätigenden Hydraulikzylinder 12, 28 angeordnet. Außerdem sind in diesem Block 27 drei Druckspeicher 32, 33, 34 angeordnet. Jede der drei als Druckleitung dienenden Bohrungen 18, 19, 20 steht mit einem Druckspeicher 32, 33, 34 zur Überlastsicherung jedes Hydraulikteilkreises und einem Schaltventil 29, 30, 31 in Verbindung. Die Bohrungen 26 sowie die Schaltventile 29, 30, 31 sind über Hydraulikleitungen 35, 36 mit Hauptventilen 37, 38 verbunden. Beide Hauptventile 37, 38 stehen mit einer Hydraulikpumpe P und einem Öltank T in Verbindung. Während mittels der Schaltventile 29, 30, 31 einzelne Hydraulikzylinder beaufschlagt werden, erfolgt mit den Hauptventilen 37, 38 die gemeinsame Betätigung aller in den einzelnen Blöcken 14 angeordneten Hydraulikzylinder 12, 28 und damit die Schwenkbewegung aller Schneidmesser 10 in die Schneid- beziehungsweise Nichtschneidstellung.

Zur Betätigung der Hydraulikzylinder 12 in der Hydraulikbaugruppe 14' sind zwei Betriebsmodi zu unterscheiden: im ersten Betriebmodus sollen die Schneidmesser 10 in den Förderkanal 8 hineingeschwenkt werden, im zweiten Betriebsmodus sollen wieder herausgeschwenkt werden. Während im ersten Betriebsmodus die Hydraulikflüssigkeit über die aus den Bohrungen 18, 19, 20 gebildeten Hydraulikleitungen den Druckräumen der Hydraulikzylinder 12 zugeführt wird, erfolgt dies im zweiten Betriebsmodus über die aus den Bohrungen 26 gebildete Hydraulikleitung. Die Abführung der Hydraulikflüssigkeit, die bei der Bewegung des Hydraulikzylinders aus dem jeweiligen Druckraum herausgedrückt wird, erfolgt im ersten Betriebsmodus durch die aus den Bohrungen 26 und im zweiten Betriebsmodus aus den Bohrungen 18, 19, 20 gebildeten Leitungen. Durch die Mehrzahl der zum Einschalten der Schneidmesser 10 im ersten Betriebsmodus zur Verfügung stehenden Hydraulikleitungen ist eine beliebige Kombination einer Aktivierung dieser Leitungen und damit eine Variation der Anzahl der einschaltbaren Schneidmesser 10 möglich, während beim Ausschalten der Schneidmesser 10 im zweiten Betriebsmodus eine solche Variation nicht mehr erforderlich ist, dementsprechend genügt für diesen Betriebsmodus eine gemeinsame Hydraulikleitung. Mit der vom Bedienstand des Traktors aus erfolgenden Betätigung der einzelnen Schaltventile 29, 30, 31 und Hauptventile 37, 38 ist also eine Vielzahl von möglichen Varianten der Anzahl der mit dem Schneidrotor 4 zusammenwirkenden Schneidmesser 10 ausführbar. Somit ist eine weitreichenden Anpassung des Zerkleinerungsgrades an die Art des Ernteguts und seine Beschaffenheit sowie dessen vorgesehene Verwendung möglich.

Im Ausführungsbeispiel sind in einem Block 14 vier Hydraulikzylinder 12 an drei Einschalt- und an eine Ausschaltleitung angeschlossen, an die aus den Bohrungen 18 gebildete Hydraulikleitung pro Block 14 sogar jeweils zwei Hydraulikzylinder 12. Ausgehend von dem Prinzip, jeden Hydraulikzylinder 12 an eine Einschalt- und eine Ausschaltbohrung anzuschließen, dabei aber in jedem Block 14 mehr als eine Einschaltbohrung vorzusehen, und zwar genau so viele, wie man durch Ventile schaltbar aktivieren möchte, lassen sich beliebig viele Variationen von Blöcken und Bohrungen miteinander zu einer Hydraulikbaueinheit 14' kombinieren. Durch die Verwendung von billigen Gußteilen, die Ausnehmungen für die jeweiligen Bohrungen und Zylindern enthalten, können so in beliebiger Kombination auf kostengünstige Weise hydraulische Stelleinrichtungen zusammengestellt werden, die nicht mehr aufwendig durch einzelne Leitungen miteinander verbunden werden müssen.

Den Hauptventilen 37, 38 sind entsperrbare Rückschlagventile zugeordnet, die entsprechend der Schaltung der Hauptventile 37, 38 betätigt werden. Mit dem Hauptventil 37 werden die Hydraulikzylinder 12, 28 in der Weise beaufschlagt, daß sämtliche Schneidmesser 10 in die Nchtschneidstellung verschwenkt werden. Die Betätigung des Hauptventils 38 bewirkt die Bewegung aller Schneidmesser 10 in die Schneidstellung. Jede Kolbenstange 13 der Hydraulikzylinder 12, 28 ist an ihrem äußeren Ende mit einem aufschraubbaren gabelförmigen Tragteil 41 zur Aufnahme einer Kontaktrolle 42 versehen. Das Tragteil 41 ist damit durch die Schraubverbindung mit der Kolbenstange 13 lösbar und in Axialrichtung längeneinstellbar verbunden. Zwischen den beiden Schenkeln der Gabel des Tragteils 41 ist ein Bolzen 43 angeordnet, auf dem die Kontaktrolle 42 drehbar gelagert ist. Alternativ kann das Tragteil 41 (Figur 3a) als Doppelgabel ausgebildet sein, wodurch je Block 14 zwei Schneidmesser abgestützt beziehungsweise betätigt werden können. In der Nichtschneidstellung der Schneidmesser 10 liegen die Kontaktrollen 42 am gewölbten Rücken 44 der Schneidmesser 10 an und stützen diese ab. Beim Ausfahren der Kolbenstangen 13 werden die Schneidmesser 10 um die Achse 11 in die Schneidstellung geschwenkt. In der Endstellung kommt dabei die Kontaktrolle 42 in einer im unteren Bereich des Schneidmessers 10 angeordneten Fixiermulde 45 zur Anlage. Das Zurückschwenken der Schneidmesser 10 in die Nichtschneidstellung erfolgt durch das Einfahren der Kolbenstange 13. Die Kontaktrollen 42 geben dadurch die Schneidmesser 10 frei und diese schwenken durch ihr Eigengewicht selbsttätig um die Achse 11 nach unten in die Nichtschneidstellung.

Die Erfindung wurde anhand des Ausführungsbeispiels einer Schneideinrichtung in einer Rundballenpresse erläutert. Sie ist jedoch auch in einer Großballenpresse und in allen anderen Erntemaschinen entsprechend einsetzbar, wenn die Aufgabe gelöst werden soll, mittels einer hydraulischen Stelleinrichtung wahlweise eine Mehrzahl von Komponenten Ein- und Auszuschalten.

### Bezugszeichenliste

- 1 -: Rundballenpresse
- 2 -: Feldboden
- 3 -: Aufnehmertrommel
- 4 -: Schneidrotor
- 5 -: Preßraum
- 6 -: Preßwalzen
- 7 -: Zuführtrommel
- 8 -: Förderkanal
- 9 -: Zinkenscheiben
- 10 -: Schneidmesser
- 11 -: Achse
- 12 -: Hydraulikzylinder
- 13 -: Kolbenstange
- 14 -: Block
- 14' -: Hydraulikbaugruppe
- 15 -: Querträger
- 16 -: Halterung
- 17 -: Querbohrung
- 18, 19, 20 -: Bohrungen
- 21, 22, 23 -: Anschlußbohrungen
- 24 -: Dichtstopfen
- 25 -: Zylinderkopf
- 26 -: Bohrung
- 27 -: endseitiger Block
- 28 -: Hydraulikzylinder
- 29, 30, 31 -: Schaltventile
- 32, 33, 34 -: Druckspeicher
- 35, 36 -: Hydraulikleitungen
- 37, 38 -: Hauptventile
- 39, 40 -: Rückschlagventil
- 41 -: Tragteil
- 43 -: Bolzen
- 44 -: Rücken
- 45 -: Fixiermulde
- 46 -: Doppelgabel
- F -: Fördereinrichtung
- P -: Hydraulikpumpe
- T -: Öltank
- 42 -: Kontaktrolle

## Patentansprüche

1. Hydraulische Stelleinrichtung zur Verstellung von einer Mehrzahl von zwischen einer Schneid- und Nichtschneidstellung schwenkbar befestigten Schneidmessern in einer landwirtschaftlichen Erntemaschine, wobei die Schneidmesser von jeweils zugeordneten Hydraulikzylindern betätigbar sind,
**dadurch gekennzeichnet,**
**daß** die Stelleinrichtung aus einer Mehrzahl von Blöcken (14) besteht, in denen jeweils zumindest ein Hydraulikzylinder (12) sowie eine Mehrzahl von Bohrungen (18, 19, 20, 26) angeordnet sind, von denen zwei der Bohrungen (18, 19, 20, 26) betriebsmäßig mit dem Hydraulikzylinder (12) verbunden sind, und die Bohrungen (18, 19, 20, 26) mehrer Blöcke (14) jeweils zumindest eine gemeinsame Hydraulikleitung bilden, sowie Kontrollmitteln zum wahlweisen Betätigen der gemeinsamen Hydraulikleitung zwecks Verstellung von mehreren jeweils auf Schneidmesser (10) wirkenden Hydraulikzylindern (12).

2. Hydraulische Stelleinrichtung, insbesondere zum wahlweisen Betätigen von Schneidmessern zum Zerkleinern von Emtegut in landwirtschaftlichen Erntemaschine, die vollständig oder in unterschiedlicher Anzahl in eine Schneidoder eine Nichtschneidstellung schwenkbar sind, wobei jedem Schneidmesser ein Hydraulikzylinder zugeordnet ist, dessen Kolbenstange über eine Kontaktrolle mit dem rückwärtigen Bereich des Messers in Verbindung steht,
**gekennzeichnet durch** folgende Merkmale:
a) in einem Block (14) sind mehrere Hydraulikzylinder (12) nebeneinander angeordnet,
b) im Block (14) sind mehrere Bohrungen (18, 19, 20) angeordnet, wobei jeweils eine dieser Bohrungen (18, 19, 20) über eine Anschlußbohrung (21, 22, 23) mit dem Zylinderraum eines Hydraulikzylinders (12) in Verbindung steht,
c) mehrere Hydraulikzylinder (12) stehen über eine durchgängige Bohrung (26) miteinander in Verbindung.

3. Hydraulische Stelleinrichtung nach einem der Ansprüche 1 bis 2,
**dadurch gekennzeichnet, dass**
jeder der zu einer Hydraulikbaueinheit (14') zusammengesetzten Blöcke (14) jeweils zumindest einen Hydraulikzylinder (12) sowie zumindest drei Bohrungen (18, 19, 20, 26) aufweist, wobei jeder der Hydraulikzylinder (12) betriebsmäßig mit zweien der Bohrungen (18, 19, 20, 26) verbunden ist, wobei die Blöcke (14) räumlich so miteinander verbunden sind, dass die Bohrungen (18, 19, 20, 26) zumindest drei sich jeweils über die Breite der Stelleinrichtung erstreckende Hydraulikleitungen bilden, und die Zulauf- und Ablauffunktionen der beiden mit einem Hydraulikzylinder (12) verbundenen Bohrungen (18, 19, 20, 26) durch ein Ventil wechselbar schaltbar sind.

4. Hydraulische Stelleinrichtung nach einem der Ansprüche 1 bis 3,
**dadurch gekennzeichnet,**
**daß** jede der Bohrungen (18, 19, 20) mit einem zugehörigen Schaltventil (29, 30, 31) und einem Druckspeicher (32, 33, 34) versehen ist.

5. Hydraulische Stelleinrichtung nach einem der Ansprüche 1 bis 4,
**dadurch gekennzeichnet,**
**daß** die Bohrungen (26) sowie die Schaltventile (29, 30, 31) über Hydraulikleitungen (35, 36) mit Hauptventilen (37, 38) verbunden sind.

6. Hydraulische Stelleinrichtung nach einem oder mehreren der Ansprüche 1 bis 5,
**dadurch gekennzeichnet,**
**daß** mehrere Blöcke (14) nebeneinander angeordnet und lösbar miteinander verbunden sind.

7. Hydraulische Stelleinrichtung nach einem oder mehreren der Ansprüche 1 bis 6,
**dadurch gekennzeichnet,**
**daß** die einzelnen Blöcke (14) durch eine Schraubverbindung zu einer kompletten Baueinheit vormontierbar sind.

8. Hydraulische Stelleinrichtung nach einem oder mehreren der Ansprüche 1 bis 7,
**dadurch gekennzeichnet,**
**daß** die Blöcke (14) mehrere durchgängige Querbohrungen (17) aufweisen, in den Gewindestangen angeordnet sind, die an den Enden mit Muttern versehen sind.

9. Hydraulische Stelleinrichtung nach einem oder mehreren der Ansprüche 1 bis 8,
**dadurch gekennzeichnet,**
**daß** die Blöcke (14) an einer mit einem Querträger (15) verbundenen Halterung (16) hinter den Schneidmessern (10) befestigt sind.

10. Hydraulische Stelleinrichtung nach einem oder mehreren der Ansprüche 1 bis 9,
**dadurch gekennzeichnet,**
**daß** im oder am endseitigen Block (27) die Schaltventile (29, 30, 31) sowie die Druckspeicher (32, 33, 34) angeordnet sind.

## Claims

1. A hydraulic setting apparatus for setting a plurality of cutting blades in an agricultural harvester, which blades are fixed pivotably between a cutting position and a non-cutting position, wherein the cutting blades are actuable by respectively associated hydraulic cylinders, **characterised in that** the setting apparatus comprises a plurality of blocks (14), in each of which are arranged at least one respective hydraulic cylinder (12) and a respective plurality of bores (18, 19, 20, 26) of which two of the bores (18, 19, 20, 26) are operatively connected to the hydraulic cylinder (12) and the bores (18, 19, 20, 26) of a plurality of blocks (14) each respectively form at least one common hydraulic line, and control means for selectively actuating the common hydraulic line for the purposes of setting a plurality of hydraulic cylinders (12) acting on respective cutting blades (10).

2. A hydraulic setting apparatus, in particular for selectively actuating cutting blades for cutting up crop material in agricultural harvesters, which are pivotable completely or in differing numbers into a cutting position or a non-cutting position, wherein associated with each cutting blade is a hydraulic cylinder whose piston rod is connected by way of a contact roller with the rearward region of the blade, **characterised by** the following features:
a) a plurality of hydraulic cylinders (12) are arranged in mutually juxtaposed relationship in a block (14),
b) a plurality of bores (18, 19, 20) are arranged in the block (14), wherein a respective one of said bores (18, 19, 20) is in communication by way of a connecting bore (21,22,23) to the cylinder chamber of a hydraulic cylinder (12), and
c) a plurality of hydraulic cylinders (12) are in communication with each other by way of a through bore (26).

3. A hydraulic setting apparatus according to one of claims 1 and 2 **characterised in that** each of the blocks (14) which are assembled to form a hydraulic structural unit (14') has at least one respective hydraulic cylinder (12) and at least three respective bores (18, 19, 20, 26), wherein each of the hydraulic cylinders (12) is operatively connected to two of the bores (18, 19, 20, 26), wherein the blocks (14) are spatially so connected to each other that the bores (18, 19, 20, 26) form at least three hydraulic lines respectively extending over the width of the setting apparatus, and the feed and discharge functions of the two bores (18, 19, 20, 26) which are connected to a hydraulic cylinder (12) are switchable changeably by a valve.

4. A hydraulic setting apparatus according to one of claims 1 to 3 **characterised in that** each of the bores (18, 19, 20) is provided with an associated switching valve (29, 30, 31) and a pressure storage means (32, 33, 34).

5. A hydraulic setting apparatus according to one of claims 1 to 4 **characterised in that** the bores (26) and the switching valves (29, 30, 31) are connected to main valves (37, 38) by way of hydraulic lines (35, 36).

6. A hydraulic setting apparatus according to one or more of claims 1 to 5 **characterised in that** a plurality of blocks (14) are arranged in mutually juxtaposed relationship and are releasably connected together.

7. A hydraulic setting apparatus according to one or more of claims 1 to 6 **characterised in that** the individual blocks (14) can be pre-assembled by a screw connection to form a complete structural unit.

8. A hydraulic setting apparatus according to one or more of claims 1 to 7 **characterised in that** the blocks (14) have a plurality of through transverse bores (17) in which are arranged screwthreaded rods which are provided at the ends with nuts.

9. A hydraulic setting apparatus according to one or more of claims 1 to 8 **characterised in that** the blocks (14) are fixed behind the cutting blades (10) to a holder (16) connected to a transverse bearer (15).

10. A hydraulic setting apparatus according to one or more of claims 1 to 9 **characterised in that** the switching valves (29, 20, 31) and the pressure storage means (32, 33, 34) are arranged in or at the end block (27).

## Revendications

1. Dispositif hydraulique de positionnement pour le déplacement d'une pluralité de couteaux montés pivotants entre une position de coupe et une position de non-coupe dans une machine agricole de récolte, les couteaux étant actionnés par des vérins hydrauliques associés,
**caractérisé par le fait que**
le dispositif de positionnement comprend une pluralité de blocs (14) dans chacun desquels sont disposés au moins un vérin hydraulique (12) et une pluralité de trous (18, 19, 20, 26), deux des trous (18, 19, 20, 26) étant en communication fonctionnelle avec le vérin hydraulique (12) et les trous (18, 19, 20, 26) de plusieurs blocs (14) formant au moins une conduite hydraulique commune, ainsi que des moyens de commande pour activer de manière sélective la conduite hydraulique commune aux fins de déplacer plusieurs vérins hydrauliques (12) qui agissent sur des couteaux (10).

2. Dispositif hydraulique de positionnement, en particulier pour actionner de manière sélective des couteaux pour le hachage du produit récolté dans une machine agricole de récolte, qui peuvent pivoter tous ou en nombre variable d'une position de coupe dans une position de non-coupe, un vérin hydraulique dont la tige de piston est liée à la partie antérieure du couteau étant associé à chaque couteau, **caractérisé par** les caractéristiques suivantes :
a) plusieurs vérin hydrauliques (12) sont disposés les uns à côté des autres dans un bloc (14),
b) dans le bloc (14) sont aménagés plusieurs trous (18, 19, 20), l'un des trous (18, 19, 20) communiquant chaque fois avec la chambre de vérin d'un vérin hydraulique (12) par l'intermédiaire d'un trou de liaison (21, 22, 23),
c) plusieurs vérins hydrauliques (12) sont reliés entre eux par un trou (26) continu.

3. Dispositif hydraulique de positionnement selon une des revendications 1 à 2, **caractérisé par le fait que** chacun des blocs (14) assemblés pour former un module hydraulique (14') comporte au moins un vérin hydraulique (12) et au moins trois trous (18, 19, 20), chacun des vérins hydrauliques (12) étant en communication fonctionnelle avec deux des trous (18, 19, 20, 26), les blocs (14) étant liés entre eux dans l'espace de telle sorte que les trous (18, 19, 20, 26) forment au moins trois conduites hydrauliques, qui s'étendent sur la totalité de la largeur du dispositif de positionnement et les fonctions d'entrée et sortie des deux trous (18, 19, 20, 26) qui communiquent avec un vérin hydraulique (12) pouvant être commutées alternativement à l'aide d'une valve.

4. Dispositif hydraulique de positionnement selon une des revendications 1 à 3, **caractérisé par le fait que** chaque trou (18, 19, 20) est équipé d'une valve de commutation (29, 30, 31) associée et d'un accumulateur de pression (32, 33, 34).

5. Dispositif hydraulique de positionnement selon une des revendications 1 à 4, **caractérisé par le fait que** les trous (26) et les valves de commutation (29, 30, 31) sont reliés à des valves principales (37, 38) par l'intermédiaire de conduites hydrauliques (35 ,36).

6. Dispositif hydraulique de positionnement selon une des revendications 1 à 5, **caractérisé par le fait que** plusieurs blocs (14) sont disposés l'un à côté de l'autre et sont liés entre eux de manière démontable.

7. Dispositif hydraulique de positionnement selon une des revendications 1 à 6, **caractérisé par le fait que** les différents blocs (14) peuvent être préassemblés par vis pour former un module complet.

8. Dispositif hydraulique de positionnement selon une des revendications 1 à 7, **caractérisé par le fait que** les blocs (14) présentent plusieurs trous transversaux (17) traversants dans lesquels sont montées de tiges filetées qui reçoivent des écrous à leurs extrémités.

9. Dispositif hydraulique de positionnement selon une des revendications 1 à 8, **caractérisé par le fait que** les blocs (14) sont fixés à un support (16) lié à une traverse (15), derrière les couteaux (10).

10. Dispositif hydraulique de positionnement selon une des revendications 1 à 9, **caractérisé par le fait que** dans ou sur le bloc d'extrémité (27) sont disposées les valves de commutation (29, 30, 31) ainsi que les accumulateurs de pression (32, 33, 34).
